# EUROPEAN PATENT SPECIFICATION

(11) **EP 3 043 437 B1**
(45) Date of publication and mention of the grant of the patent: **27.11.2019**
(21) Application number: 15178468.3
(22) Date of filing: 27.07.2015
(51) Int. Cl.: H02H 3/33, H01H 83/04, H01H 83/14

(54) **RESIDUAL CURRENT DEVICES**
RESTSTROMVORRICHTUNGEN
DISPOSITIFS À COURANT RÉSIDUEL

(30) Priority: 06.01.2015 GB 201500129
(43) Date of publication of application: 13.07.2016
(73) Proprietor: Shakira Limited, Ballinasloe, County Galway (IE)
(72) Inventor: O'Brien, Donal, Galway (IE)
(74) Representative: Hanna Moore + Curley

(56) References cited:
- WO-A1-2007/123389
- US-A1- 2012 257 314
- US-A1- 2014 009 856

## Description

This invention relates to residual current devices (RCDs).

Field studies of installed RCDs (also known as GFCIs) carried out in numerous countries such as the USA, Germany, Italy and Denmark, revealed that the level of defective RCDs found in installations in those countries varied from about 3% to 8%.

Electrical installation rules in most countries require RCDs to be tested at regular intervals, e.g. every 3 or 6 months. However, some of the above studies also revealed that in most cases, RCDs are rarely tested by users.

Undetected defective RCDs deprive users of shock and fire protection, but also create a potential risk and liability for responsible bodies or persons, e.g. business owners, managers of schools, hospitals, airports, etc. in the event of a defective RCD failing to operate when required. For those organisations that do undertake regular manual testing of RCDs, there is a growing economic cost of carrying out such tests.

The most obvious reason for failure of an RCD to operate is due to component failure. However, there are other reasons that an RCD could fail to operate, e.g. desensitization due to an installation fault such as a double grounding of the neutral (DGN) condition on an AC installation, or desensitization or even blinding of an AC type RCD due to the presence of DC currents flowing in an AC "system", e.g. during electric vehicle charging.

For clarification, desensitization occurs when the trip level of an RCD increases above its rated operating level IΔn, e.g. when an RCD rated to trip at a residual current of 30mA requires more than 30mA to trip.

GFCI/RCDs divide primarily into two categories: voltage dependent (VD) and voltage independent (VI) devices. A VI device relies entirely on the energy derived from a residual current to cause activation of a solenoid or relay and resultant automatic opening of load contacts, whereas a VD device detects the residual fault current, but then uses energy derived from the mains voltage to achieve automatic tripping.

US3787708 discloses a VD GFCI with a manual test mechanism.

US3786356 discloses a VD GFCI for detecting a double grounded neutral (DGN) fault condition. A self-testing mechanism responds to a DGN condition and no other condition.

US2012/257314 discloses a VD GFCI which has self-testing mechanism and end of life indication. A simulated ground fault is arranged such that there is not enough current to bias the solenoid to interrupt the AC power to the load" during the test pulses.

US8085516 discloses a VD GFCI with self-testing. Current flow through the solenoid coil during each test pulse is intentionally limited in magnitude so as to prevent activation of the solenoid and tripping of the RCD.

WO2012/131508 discloses a VD RCD with automatic self-testing. Again, current flow through the solenoid coil during each test pulse is intentionally limited in magnitude so as to prevent activation of the solenoid and tripping of the RCD.

EP2445074 discloses a VI RCD with a tuned circuit to enable detection of residual fault currents over a range of frequencies. It does not describe or make any reference to automatic self-testing.

WO2007/123389 discloses a VI RCD that provides an audible and/or visual alert to remind the user of the device to perform an integrity test on the earth leakage protection device at a preset time interval. This amounts to little more than a timed alarm function that is added externally to an RCD to alert the user to manually test the device.

VI RCDs present very difficult challenges for automated self-testing, partly because of the sensitivity of the switch controlling the load contacts, which typically requires <50µVA of energy for less than 1mSecond of its operation, and also the difficulty of detecting the level of current flow through the switch during testing.

According to the present invention there is provided a voltage independent residual current device (RCD) according to claim 1.

An embodiment of RCD described herein includes a self testing (ST) circuit that is intended to provide automatic testing of the RCD on a regular and continuous basis throughout the life of the RCD, and with means to indicate an "End of Life" (EOL) condition when the RCD fails to respond correctly to the self testing signals. For convenience, these two functions are collectively referred to as STEOL. Furthermore, the STEOL circuit will detect an unacceptable level of desensitization of the RCD regardless of the cause, e.g. DGN condition or DC current flow, etc. The STEOL circuit will also indicate an EOL condition in the event of failure of the ST function.

The embodiment of the invention will now be described, by way of example, with reference to the accompanying drawings, in which:
Figure 1 is a circuit diagram of an embodiment of a VI (voltage independent) RCD according to the invention.
Figure 2 is a schematic diagram of a permanent magnet relay (PMR) which may be used in the embodiment of Figure 1.

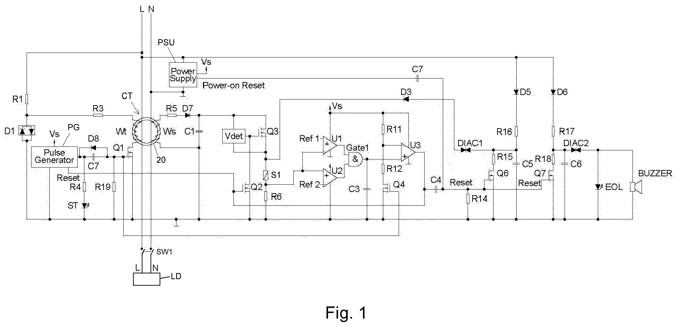

Referring to Figure 1, AC live and neutral mains supply conductors L and N respectively pass through the ferromagnetic toroidal core 20 of a current transformer CT en route to a load LD. The conductors L, N constitute primary windings for the CT (the term "winding" is used in accordance with conventional terminology even though the conductors L, N pass directly through the core 20 rather than being wound on it). Ganged load contacts SW1 in the supply conductors L, N are closed under normal conditions so that power can be provided to the load. The output of the current transformer CT appears across a secondary winding Ws.

In the absence of a residual current, the vector sum of the primary currents flowing through the core 20 will be zero since the currents flowing in the L and N supply conductors will be equal and opposite; thus the voltage developed across Ws will be zero. The function of CT and associated circuitry to be described is to detect a differential current (i.e. a non-zero vector sum of currents) flowing in L, N through the CT core 20 having sufficient magnitude as to be indicative of a residual current at or above the rated operating threshold (trip level) IAn of the RCD, e.g. 30mA.

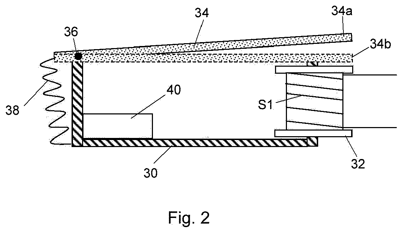

In the event of a residual current ≥IΔn a capacitor C1 will charge up and eventually the voltage on C1 will exceed the reference level (threshold) of a voltage level detector Vdet, which in turn will cause a normally-off transistor Q3 to be turned on. C1 will then discharge through a discharge path comprising a resistor R6 and the coil S1 of an electromechanical switch (an electromechanical switch is an electrical switch with mechanical contacts which are operated - i.e. opened and/or closed - by a magnetic field produced by current flowing in a coil, usually a solenoid). In the present embodiment the electromechanical switch is a permanent magnet relay (PMR); the PMR will be described below with reference to Figure 2. Once the current through the coil S1 exceeds a certain magnitude and duration, the PMR will be actuated and, as will be described, open the load contacts SW1. It can be seen that the operation of the VI RCD is totally independent of the mains supply.

The RCD components are calibrated so as to ensure that the RCD trips at its rated residual operating current, IAn (e.g. 30mA), but also that the RCD does not trip at currents up to 50% of this value, e.g. 15mA.

A DC supply is derived from the mains supply via a power supply circuit R1, D1. This DC supply is used to activate a pulse-generating circuit PG which produces a continuous stream of intermittent self-test pulses (ST pulses) at regular intervals. Examples of pulse generating circuits are widely known and will be familiar to those versed in the art. These pulses are fed to transistor Q1 to turn it on for the duration of each ST pulse. Each time Q1 is turned on it connects a test winding Wt, which forms a further primary winding on the CT core 20, to a common or ground line so that a current flows from the live conductor L to ground via resistors R1 and R3 and winding Wt. Winding Wt can comprise one or more turns, but in any event resistors R1, R3 and winding Wt are calibrated to ensure that a current is induced in the secondary winding Ws corresponding to that which would flow if there were a differential current flowing in L, N approximating closely to IΔn. The current in Ws is monitored via resistor R5 by a voltage level detector Vdet, and when the detected voltage exceeds a predetermined value, transistor Q3 is turned on with the result that C1 discharges and current now flows through the coil S1 and resistor R6.

U1 and U2 form a window comparator, and the voltage developed across R6 is fed to their -ve and +ve inputs respectively. Their corresponding +ve and -ve inputs are supplied respectively with reference voltages Ref1 and Ref2 derived from Vs via dropper resistors, not shown. If the voltage developed across R6 is greater than Ref2 and less than Ref1, the positive outputs from U1 and U2 will be fed to an AND gate Gate 1 whose output will go high. This will pull U3 +ve input high. The ST pulse that caused Q1 to turn on is also fed to Q4 to turn it on and enable U3 -ve input to be pulled low. The combination of U3 +ve input being and its -ve input being pulled low will cause U3 output to go high. The positive output from U3 is fed back to the Reset input of the pulse generator PG which, in response, terminates the ST pulse by pulling the output of PG low. PG output going low turns off Q1 via the diode D8, so terminating the flow of the test current through Wt. Resistor R19 works with C7 to prevent the gate of Q1 remaining high if the output from the pulse generator PG inadvertently remains high. The positive output from U3 is also fed back to the gate of Q2, turning it on. When Q2 turns on it pulls the gate of Q3 gate low, forcing Q3 to turn off and so interrupting the flow of current through the coil S1.

In the event of a fault, where S1 has either low impedance or is short circuit, then the pulse across R6 rises rapidly to exceed Ref1 (as well as Ref2). GATE1 would not have time to transition sufficiently to effect U3 due to the capacitor C3 and so would not reset the pulse generator.

It is to be noted that Q4 will only be turned on by an ST pulse and not by an actual residual current fault, so that, in the latter case, even though the voltage on R6 may exceed Ref2 at U1, U3 output cannot go high and turn off Q3. In this way "genuine" residual current faults are distinguished from ST pulses.

From the instant that power is applied to the RCD circuit, capacitor C5 will have been charging up via resistor R16 and D5. If the voltage on C5 reaches the breakover voltage of DIAC1, a current will flow from C5 via DIAC1 and D3 through the coil S1, causing it to actuate and trip the RCD. From the instant that power is applied to the circuit, capacitor C6 will have been charging up via resistor R17 and D6. If the voltage on C6 reaches the breakover voltage of DIAC2, a current will flow from C6 via DIAC2 and a light emitting diode EOL to indicate an End Of Life state. (Advantageously a buzzer may also or alternatively be activated by this current). However, when U3 output goes high, a positive-going pulse is fed via capacitor C4 to Q6 and Q7, turning on both transistors Q6 and Q7 with the result that C5 and C6 are discharged before the breakover voltages of their associated DIACs are reached. This prevents actuation of the PMR and lighting of the EOL LED in the case of a successful test.

After a predetermined interval, the pulse generator PG will produce another positive going pulse to repeat the self-test process.

If the mains supply is momentarily removed and restored, capacitors C5 and C6 could be partially charged and then require a much shorter time to reach the breakover of their respective DIACs and cause activation of the EOL state. A power supply unit PSU is advantageously provided with a Power-On Reset output that goes high immediately power is applied to the RCD circuit. This signal is fed via C7 to Q6 and Q7 to turn them on momentarily and discharge capacitors C5 and C6 to ensure that the EOL charging cycle always starts from a zero charge level whenever power is applied to the RCD circuit.

It should be noted that under a residual current fault condition of ≥IΔn, the charge on C1 would flow continuously through the coil S1 until the RCD tripped and the residual current flow terminated. Under an EOL state, a current of sufficient magnitude and duration would also flow through the coil S1 via DIAC1 to trip the RCD. However, during each test pulse, the current flowing through the coil S1 is interrupted or terminated by the pulse derived from U3 output going high. If this interrupting pulse did not arrive for any reason, the sustained flow of current through the coil S1 would result in actuation of the PMR and tripping of the RCD. This is clearly undesirable during the test sequence. The key to preventing actuation of the PMR is to ensure that the current flow through the coil S1 is interrupted before the PMR can be actuated. It can be seen from the circuit that there is minimal time delay between the commencement of current flow through coil S1 due to the test pulse and the interruption of the flow of that current by turning off Q3. It can be demonstrated that the actuation (response time) of a typical VI RCD PMR is a function of the magnitude of the current flow through the PMR coil and the duration of that current flow. Limiting the magnitude and duration of the test current flow through the PMR during each test cycle ensures that validation of the correct operation of the system can be done without unwanted tripping during each test sequence, i.e. for test pulses the current flow through S1 terminates within the response time of the PMR.

From the above it can be seen that any significant change in the characteristics of the RCD will impair the correct operation of the RCD, but the circuit arrangement of Figure 1 will detect such change. Also, the impedance of the PMR is largely dependent on the state of its coil and its closed or open states, and if this impedance increased above a certain level, U3 output would not go high and the EOL states as initiated by transistors Q6 and Q7 would be activated. Likewise if the impedance of the PMR fell below a certain value, the EOL states would be activated. Thus, the window created by Ref1 and Ref2 enables the EOL circuitry to detect if either too much or too little current flows in R6 in response to the ST pulses and if the switch circuitry has gone EOL for any reason.

It can also be seen that failure of ST circuitry would result in automatic activation of the EOL state. For example, failure of the Power Supply circuit, the pulse generator circuit, any of transistors Q1 to Q5, any of comparators U1 to U3 or other key components associated with the ST circuitry will result in automatic activation of the EOL states.

Provision of two separate EOL circuits in the form of Q6 and Q7 provides for built in redundancy so that the EOL indicating states are not reliant on a single circuit, and one of the EOL states will still be indicated in the event of failure of the other. It would also be possible to use the EOL circuit of Q6 to activate the PMR and also light the EOL LED, and possible to use the circuit of Q7 to also perform both of these functions. The EOL circuit of Q6 could also be omitted if it was desirable to maintain continuity of supply to a load whilst indicating the EOL state.

Separately, a further transistor (not shown) could be added in series with Q4 and controlled by the ST pulses, to ensure that if Q4 were to fail by short-circuiting (and so always enabling U3), the circuit could still continue to operate and test for other causes of failure. Alternatively, one (or more) further transistor(s) (not shown) could be added in parallel with Q4, to ensure that if Q4 (or its series redundant transistor) were to fail by open-circuiting, the circuit could still continue to operate and test for other causes of failure.

Figure 2 is a schematic diagram of a PMR which may be used in the embodiment of Figure 1.

The PMR comprises a ferromagnetic yoke assembly 30 fitted with a bobbin 32. The PMR coil S1 (Figure 1) is wound on the bobbin. A moving armature 34 is pivoted at one end 36 to the yoke 30 and is biased towards an open position 34a by an opening spring 38 acting on the LHS of the armature, as seen in Figure 2. A permanent magnet 40 is fitted to the yoke and induces a magnetic flux in the yoke. When the free (RH) end of the armature 34 is moved to the closed position 34b in contact with the yoke, a closed magnetic path is established and the flux flows around the closed path formed by the yoke and the armature. This magnetic flux holds the armature in the closed position against the bias of the opening spring.

When a current of a certain polarity is caused to flow in the coil S1, an electromagnetic field will be established which will produce a flux in opposition to that of the permanent magnet such that the holding force on the armature will be reduced. When the current reaches a certain level, the holding magnetic force will be sufficiently reduced so as to release the armature and allow it to move to the open position under the action of the spring 38. This movement is referred to as actuation. The movement of the armature 34 from the closed position 34b to the open position 34a is used to open the ganged contacts SW1 via a trip lever (not shown) or other mechanical linkage between the armature and the contacts. The PMR is re-latched by manually moving the actuator back to the closed position 34b.

It is worth noting that the PMR coil S1 will have a certain DC resistance which is a constant under normal conditions. However, the relay also has an impedance when measured using an AC source, e.g. at a power frequency of 50Hz, and this impedance will be different when the relay is in the open or closed states. In general the impedance will be at its lowest value when the PMR is in the open state, and at its highest value when the PMR is in the closed state.

In the above embodiment, the RCD is protecting a single phase mains installation, but the invention could readily be applied to multiphase circuits or loads.

The invention is not limited to the embodiments described herein which may be modified or varied without departing from the scope of the invention.

## Claims

1. A voltage independent residual current device (RCD) comprising:
an electromagnetic switch (S1, SW1) having a coil (S1) whose operation controls a set of load contacts (SW1) in a plurality of electricity supply conductors (L, N), the electromagnetic switch having a response time which is a function of the magnitude and duration of the current flow through the coil (S1),
means (CT, C1, Vdet, Q3) for detecting a residual current in said supply conductors (L, N) and when such residual current is above a certain threshold (IΔn) for causing a current to flow through the coil (S1) for longer than the response time of the electromagnetic switch so that the load contacts (SW1) open, said current caused to flow through the coil (S1) being derived, independently of the electricity supply, entirely from energy derived from the residual current,
means (PG) for generating intermittent test pulses each simulating a residual current above said certain threshold (IΔn), said test pulses being detected by the detecting means (CT, C1, Vdet, Q3) to cause a current, also derived independently of the electricity supply, to flow through the coil (S1), and
means (U1-U3, Q2, Q3) operable only in respect of said test pulses to interrupt said current flow through the coil (S1) within the response time of the electromagnetic switch, such that the contacts (SW1) do not open in response to said test pulses.

2. An RCD as claimed in claim 1, wherein the detecting means comprises:
a current transformer (CT) having said supply conductors (L, N) as primary windings,
a secondary winding (Ws) into which a secondary current is induced in the case of a differential current in the primary windings (L, N),
a capacitor (C1) connected across the secondary winding (Ws),
a solid state switch (Q3) connected in series with the coil (S1) of the EM switch, both being connected across the secondary winding (Ws) in parallel with the capacitor (C1), and
means (Vdet) for monitoring the voltage on the capacitor (C1) and turning on the solid state switch (Q3) when the voltage on the capacitor (C1) exceeds said certain threshold, the capacitor (C1) discharging along a discharge path including the coil (S1) for longer than the response time of the electromanetic switch so as to open the set of contacts (SW1), whereby the opening of the contacts is independent of the supply,
and wherein the means (PG) for generating intermittent test pulses is coupled to the current transformer (CT) via a further primary winding (Wt) so as to produce a differential current above said certain threshold (IΔn) in the current transformer and a resultant secondary current in the secondary winding (Ws), each test pulse being sufficient to cause the voltage on the capacitor (C1) to exceed said certain threshold so as to discharge the capacitor (C1) along the discharge path including the coil (S1).

3. An RCD as claimed in claim 2, wherein the interrupt means (U1-U3, Q2, Q3) also terminates the test pulses.

4. An RCD as claimed in claim 2 or 3, wherein the interrupt means comprises means (U2) to determine when the voltage on a resistance (R6) in series with the coil (S1) exceeds a certain reference level (Ref2) and in response to such detection to generate said interrupt signal.

5. An RCD as claimed in claim 4, wherein said interrupt means comprises means to determine when the voltage on said resistance (R6) is less than a second reference level (Ref1), said second reference level (Ref1) being greater than said certain reference level (Ref2) and in response to detecting said voltage being below said second reference level, generating said interrupt signal.

6. An RCD as claimed in claim 4, wherein the interrupt signal turns off the solid state switch (Q3) in the discharge path.

7. An RCD as claimed in claim 4, including means (Q4) to enable the interrupt means only in respect of test pulses.

8. An RCD as claimed in any one of claims 1 to 7, including means for opening the contacts (SW1) if an interrupt signal is not generated in respect of a test pulse.

9. An RCD as claimed in claim 8, including a second capacitor (C5) which is continuously charged from the supply but intermittently discharged in response to the generation of each interrupt signal before a certain voltage threshold is reached, and wherein if an interrupt signal is not generated in respect of a test pulse the second capacitor (C5) is not discharged so that the certain voltage threshold is exceeded and the second capacitor discharges through the coil (S1) to open the contacts (SW1).

10. An RCD as claimed in claim 9, including a third capacitor (C6) which is continuously charged from the supply but intermittently discharged in response to the generation of each interrupt signal before a certain voltage threshold is reached, and wherein if an interrupt signal is not generated in respect of a test pulse the third capacitor (C6) is not discharged so that the certain voltage threshold is exceeded and the second capacitor discharges through and activates a visible alarm (EOL).

## Patentansprüche

1. Spannungsunabhängige Fehlerstrom-Schutzvorrichtung (RCD), umfassend:
einen elektromagnetischen Schalter (S1, SW1), der eine Spule (S1) aufweist, dessen Betrieb eine Gruppe von Lastkontakten (SW1) in einer Vielzahl von Stromversorgungsleitern (L, N) steuert, wobei der elektromagnetische Schalter eine Reaktionszeit aufweist, die eine Funktion der Stärke und Dauer des Stromflusses durch die Spule (S1) ist,
Mittel (CT, C1, Vdet, Q3) zum Erkennen eines Fehlerstroms in den Versorgungsleitern (L, N), und wenn ein derartiger Fehlerstrom oberhalb eines bestimmten Schwellenwerts (IΔn) liegt, um zu bewirken, dass ein Strom durch die Spule (S1) für länger als die Reaktionszeit des elektromagnetischen Schalters fließt, sodass die Lastkontakte (SW1) sich öffnen, der Strom, der veranlasst wird, durch die Spule (S1) zu fließen, vollständig aus der Energie, die von dem Fehlerstrom abgeleitet wird, abgeleitet wird, unabhängig von der Stromversorgung,
Mittel (PG) zum Erzeugen von intermittierenden Prüfimpulsen, die jeweils einen Fehlerstrom oberhalb des bestimmten Schwellenwertes (IΔn) simulieren, wobei die Prüfimpulse von dem Erkennungsmittel (CT, C1, Vdet, Q3) erkannt werden, um zu bewirken, dass ein Strom, der ebenfalls unabhängig von der Stromversorgung abgeleitet wird, durch die Spule (S1) fließt, und
Mittel (U1-U3, Q2, Q3), die nur mit Bezug auf die Prüfimpulse betreibbar sind, um den Stromfluss durch die Spule (S1) innerhalb der Reaktionszeit des elektromagnetischen Schalters zu unterbrechen, sodass die Kontakte (SW1) sich nicht in Reaktion auf die Prüfimpulse öffnen.

2. RCD nach Anspruch 1, wobei das Erkennungsmittel umfasst:
einen Stromwandler (CT), der die Versorgungsleiter (L, N) als Primärwicklungen aufweist,
eine Sekundärwicklung (Ws), in die ein Sekundärstrom im Falle eines Differenzstroms in den Primärwicklungen (L, N) induziert wird,
einen Kondensator (C1), der über die Sekundärwicklung (Ws) verbunden ist,
einen Festkörperschalter (Q3), der mit der Spule (S1) des EM-Schalters in Reihe geschaltet ist, wobei beide über die Sekundärwicklung (Ws) mit dem Kondensator (C1) parallel geschaltet sind, und
Mittel (Vdet) zum Überwachen der Spannung an dem Festkörperschalter (C1) und zum Einschalten des Festkörperschalters (Q3), wenn die Spannung an dem Kondensator (C1) den bestimmten Schwellenwert überschreitet, wobei der Kondensator (C1) entlang einer Entladungsstrecke, die die Spule (S1) beinhaltet, sich länger als die Reaktionszeit des elektromagnetischen Schalters entlädt, um die Gruppe von Kontakten (SW1) zu öffnen, wobei das Öffnen der Kontakte unabhängig von der Versorgung ist,
und wobei das Mittel (PG) zum Erzeugen intermittierender Prüfimpulse über eine weitere Primärwicklung (Wt) mit dem Stromwandler (CT) gekoppelt ist, um einen Differenzstrom oberhalb des bestimmten Schwellenwerts (IΔn) in dem Stromwandler und einen sich daraus ergebenden Sekundärstrom in der Sekundärwicklung (Ws) zu erzeugen, wobei jeder Prüfimpuls ausreichend ist, um zu bewirken, dass die Spannung an dem Kondensator (C1) den bestimmten Schwellenwert überschreitet, um den Kondensator (C1) entlang der Entladungsstrecke, die die Spule (S1) beinhaltet, zu entladen.

3. RCD nach Anspruch 2, wobei das Unterbrechungsmittel (U1-U3, Q2, Q3) ebenfalls die Prüfimpulse beendet.

4. RCD nach Anspruch 2 oder 3, wobei das Unterbrechungsmittel Mittel (U2) umfasst, um zu ermitteln, wann die Spannung an einem Widerstand (R6) in Reihe mit der Spule (S1) einen bestimmten Referenzpegel (Ref2) überschreitet, und um in Reaktion auf eine derartige Ermittlung das Unterbrechungssignal zu erzeugen.

5. RCD nach Anspruch 4, wobei das Unterbrechungsmittel Mittel umfasst, um zu ermitteln, wann die Spannung an dem Widerstand (R6) geringer ist als ein zweiter Referenzpegel (Ref1), wobei der zweite Referenzpegel (Ref1) größer ist als der bestimmte Referenzpegel (Ref2) und in Reaktion auf das Ermitteln, dass die Spannung sich unterhalb des zweiten Referenzpegels befindet, Erzeugen des Unterbrechungssignals.

6. RCD nach Anspruch 4, wobei das Unterbrechungssignal den Festkörperschalter (Q3) in der Entladungsstrecke abschaltet.

7. RCD nach Anspruch 4, die Mittel (Q4) beinhaltet, um das Unterbrechungsmittel nur mit Bezug auf Prüfimpulse zu aktivieren.

8. RCD nach einem der Ansprüche 1 bis 7, die Mittel zum Öffnen der Kontakte (SW1) beinhaltet, wenn ein Unterbrechungssignal nicht mit Bezug auf einen Prüfimpuls erzeugt wird.

9. RCD nach Anspruch 8, die einen zweiten Kondensator (C5) beinhaltet, der kontinuierlich aus der Versorgung geladen, aber intermittierend entladen wird in Reaktion auf die Erzeugung jedes Unterbrechungssignals, bevor ein bestimmter Spannungsschwellenwert erreicht wird, und wobei, wenn ein Unterbrechungssignal nicht in Bezug auf eine Prüfimpuls erzeugt wird, der zweite Kondensator (C5) nicht entladen wird, sodass der bestimmte Spannungsschwellenwert überschritten wird und der zweite Kondensator sich durch die Spule (S1) entlädt, um die Kontakte (SW1) zu öffnen.

10. RCD nach Anspruch 9, die einen dritten Kondensator (C6) beinhaltet, der kontinuierlich aus der Versorgung geladen, aber intermittierend entladen wird in Reaktion auf die Erzeugung jedes Unterbrechungssignals, bevor ein bestimmter Spannungsschwellenwert erreicht wird, und wobei, wenn ein Unterbrechungssignal nicht in Bezug auf einen Prüfimpuls erzeugt wird, der dritte Kondensator (C6) nicht entladen wird, sodass der bestimmte Spannungsschwellenwert überschritten wird und der zweite Kondensator sich durch entlädt und einen sichtbaren Alarm aktiviert.

## Revendications

1. Dispositif à courant résiduel (RCD) indépendant de la tension comprenant :
un commutateur électromagnétique (S1, SW1) présentant une bobine (S1) dont le fonctionnement commande un ensemble de contacts de charge (SW1) dans une pluralité de conducteurs d'alimentation en électricité (L, N), le commutateur électromagnétique présentant un temps de réponse qui est fonction de l'amplitude et de la durée du flux de courant à travers la bobine (S1),
des moyens (CT, C1, Vdet, Q3) pour détecter un courant résiduel dans lesdits conducteurs d'alimentation (L, N) et lorsqu'un tel courant résiduel est au-dessus d'un certain seuil (IΔn) pour amener un courant à circuler à travers la bobine (S1) pendant plus longtemps que le temps de réponse du commutateur électromagnétique de telle sorte que les contacts de charge (SW1) s'ouvrent, ledit courant amené à circuler à travers la bobine (S1) étant dérivé, indépendamment de l'alimentation en électricité, entièrement à partir de l'énergie dérivée à partir du courant résiduel,
des moyens (PG) pour générer des impulsions d'essai intermittentes simulant chacune un courant résiduel au-dessus dudit certain seuil (IΔn), lesdites impulsions d'essai étant détectées par les moyens de détection (CT, C1, Vdet, Q3) pour amener un courant, également dérivé indépendamment de l'alimentation en électricité, à circuler à travers la bobine (S1), et
des moyens (U1-U3, Q2, Q3) aptes à fonctionner uniquement par rapport auxdites impulsions d'essai pour interrompre ledit flux de courant à travers la bobine (S1) dans le temps de réponse du commutateur électromagnétique, de telle sorte que les contacts (SW1) ne s'ouvrent pas en réponse auxdites impulsions d'essai.

2. RCD tel que revendiqué à la revendication 1, dans lequel les moyens de détection comprennent :
un transformateur de courant (CT) présentant lesdits conducteurs d'alimentation (L, N) en tant qu'enroulements primaires,
un enroulement secondaire (Ws) dans lequel un courant secondaire est induit dans le cas d'un courant différentiel dans les enroulements primaires (L, N),
un condensateur (C1) connecté de part et d'autre de l'enroulement secondaire (Ws),
un commutateur à semi-conducteurs (Q3) connecté en série à la bobine (S1) du commutateur EM, les deux étant connectés de part et d'autre de l'enroulement secondaire (Ws) en parallèle avec le condensateur (C1), et
des moyens (Vdet) pour surveiller la tension sur le condensateur (C1) et fermer le commutateur à semi-conducteurs (Q3) lorsque la tension sur le condensateur (C1) dépasse ledit certain seuil, le condensateur (C1) se déchargeant le long d'un trajet de décharge comprenant la bobine (S1) pendant plus longtemps que le temps de réponse du commutateur électromagnétique de façon à couvrir l'ensemble de contacts (SW1), moyennant quoi l'ouverture des contacts est indépendante de l'alimentation,
et dans lequel les moyens (PG) pour générer des impulsions d'essai intermittentes sont couplés au transformateur de courant (CT) par l'intermédiaire d'un enroulement primaire supplémentaire (Wt) de façon à produire un courant différentiel au-dessus dudit certain seuil (IΔn) dans le transformateur de courant et un courant secondaire résultant dans l'enroulement secondaire (Ws), chaque impulsion d'essai étant suffisante pour amener la tension sur le condensateur (C1) à dépasser ledit certain seuil de façon à décharger le condensateur (C1) le long du trajet de décharge comprenant la bobine (S1).

3. RCD tel que revendiqué à la revendication 2, dans lequel les moyens d'interruption (U1-U3, Q2, Q3) mettent également fin aux impulsions d'essai.

4. RCD tel que revendiqué à la revendication 2 ou 3, dans lequel les moyens d'interruption comprennent des moyens (U2) pour déterminer le moment où la tension sur une résistance (R6) en série avec la bobine (S1) dépasse un certain niveau de référence (Ref2) et en réponse à une telle détection pour générer ledit signal d'interruption.

5. RCD tel que revendiqué à la revendication 4, dans lequel lesdits moyens d'interruption comprennent des moyens pour déterminer le moment où la tension sur ladite résistance (R6) est inférieure à un second niveau de référence (Ref1), ledit second niveau de référence (Ref1) étant supérieur audit certain niveau de référence (Ref2) et en réponse à la détection de ladite tension qui est au-dessous dudit second niveau de référence, générer ledit signal d'interruption.

6. RCD tel que revendiqué à la revendication 4, dans lequel le signal d'interruption ouvre le commutateur à semi-conducteurs (Q3) dans le trajet de décharge.

7. RCD tel que revendiqué à la revendication 4, comprenant des moyens (Q4) pour activer les moyens d'interruption uniquement par rapport à des impulsions d'essai.

8. RCD tel que revendiqué à l'une quelconque des revendications 1 à 7, comprenant des moyens pour ouvrir les contacts (SW1) si un signal d'interruption n'est pas généré par rapport à une impulsion d'essai.

9. RCD tel que revendiqué à la revendication 8, comprenant un second condensateur (C5) qui est chargé en continu à partir de l'alimentation mais déchargé de façon intermittente en réponse à la génération de chaque signal d'interruption avant qu'un certain seuil de tension ne soit atteint, et dans lequel, si un signal d'interruption n'est pas généré par rapport à une impulsion d'essai, le second condensateur (C5) n'est pas déchargé de telle sorte que le certain seuil de tension est dépassé et le second condensateur se décharge à travers la bobine (S1) pour ouvrir les contacts (SW1).

10. RCD tel que revendiqué à la revendication 9, comprenant un troisième condensateur (C6) qui est chargé en continu à partir de l'alimentation mais déchargé de façon intermittente en réponse à la génération de chaque signal d'interruption avant qu'un certain seuil de tension ne soit atteint, et dans lequel, si un signal d'interruption n'est pas généré par rapport à une impulsion d'essai, le troisième condensateur (C6) n'est pas déchargé de telle sorte que le certain seuil de tension est dépassé et le second condensateur se décharge à travers et active une alarme visible (EOL).
